# EUROPÄISCHE PATENTSCHRIFT

(11) **EP 0 857 127 B1**
(45) Veröffentlichungstag und Bekanntmachung des Hinweises auf die Patenterteilung: **31.07.2002**
(21) Anmeldenummer: 96938096.3
(22) Anmeldetag: 05.11.1996
(51) Int. Cl.: B60T 7/12, B60T 13/72, B60T 8/32, B60T 8/24, B60T 8/36

(54) **VERFAHREN ZUM BETRIEB EINES PNEUMATISCHEN BREMSKRAFTVERSTÄRKERS**
METHOD OF OPERATING A PNEUMATIC BRAKE BOOSTER
PROCEDE D'ACTIONNEMENT D'UN SERVOFREIN PNEUMATIQUE

(30) Priorität: 06.11.1995 DE 19541101
(43) Veröffentlichungstag der Anmeldung: 12.08.1998
(73) Patentinhaber: Continental Teves AG & Co. oHG, 60488 Frankfurt (DE)
(72) Erfinder: KLESEN, Christof, D-64397 Modautal (DE); FÜHRER, Jochen, D-64287 Darmstadt (DE); VOGT, Michael, D-55469 Simmern (DE); ZINGEL, Heinz, D-65520 Bad Camberg (DE); NEU, Thorsten, D-35792 Löhnberg (DE); ZYDEK, Michael, D-35428 Langgöns (DE); KREBS, Stefan, D-65760 Eschborn (DE); BERTHOLD, Thomas, D-64289 Darmstadt (DE)
(86) Internationale Anmeldenummer: EP9604828
(87) Internationale Veröffentlichungsnummer: WO9717239

(56) Entgegenhaltungen:
- WO-A-93/24353
- DE-A- 4 238 333
- DE-A- 4 324 205
- DE-A- 4 405 092

## Beschreibung

Die Erfindung betrifft ein Verfahren zum Betrieb eines pneumatischen Bremskraftverstärkers mit einem Verstärkergehäuse, dessen Innenraum durch eine bewegliche Wand in eine erste Kammer (Unterdruckkammer) und eine zweite Kammer (Arbeitskammer) unterteilt ist, sowie einem Steuergehäuse, in dem ein eine auf die bewegliche Wand einwirkende pneumatische Druckdifferenz steuerndes Steuerventil angeordnet ist, das einen durch eine Betätigungsstange betätigbaren ersten Dichtsitz, dessen öffnen eine Belüftung der Arbeitskammer ermöglicht, einen zweiten Dichtsitz, dessen Öffnen eine Verbindung zwischen den beiden Kammern ermöglicht, sowie einen mit den beiden Dichtsitzen zusammenwirkenden elastischen Ventilkörper aufweist, wobei der erste Dichtsitz oder ein weiterer, mit dem Ventilkörper zusammenwirkender Dichtsitz unabhängig von der Betätigungsstange im Sinne der Belüftung der Arbeitskammer durch einen mittels einer elektronischen Steuereinheit ansteuerbaren Elektromagneten betätigbar ist und wobei der in einem dem Bremskraftverstärker nachgeschalteten Hauptbremszylinder eingesteuerte hydraulische Druck ermittelt wird.

Ein derartiges Verfahren ist aus der internationalen Patentanmeldung WO 93/24353 bekannt. Bei der Durchführung des vorbekannten Verfahrens wird der momentanen Betätigungsgeschwindigkeit eines den Bremskraftverstärker betätigenden Bremspedals fortlaufend ein abgespeicherter Bremsdruck-Sollwert zugeordnet, der mit einem gemessenen Bremsdruck-Istwert verglichen wird. In Abhängigkeit von dem Vergleichsergebnis wird der Bremskraftverstärker angesteuert. Als weniger vorteilhaft ist bei dem vorbekannten Verfahren die Tatsache anzusehen, daß die Druckvorgabe durch Auswertung der Bremspedalbewegung erfolgt, so daß eine reine Fremdbetätigung, die ohne eine Betätigung des Bremskraftverstärkers durch den Fahrer durchzuführen ist, nicht realisierbar ist. Das System zur Durchführung des bekannten Verfahrens ist somit für einige Anwendungsfälle, wie z. B. die Berganfahrhilfe, die Vorladung der hydraulischen Bremsanlage oder die Abstandsregelung, nicht geeignet.

Aus der DE 44 05 092 C1 ist ein pneumatischer Bremskraftverstärker mit elektromagnetischer Hilfssteuerung bekannt, bei dem der erste Dichtsitz an einer zylindrischen Hülse ausgebildet ist, die mit dem Anker eines im Steuergehäuse angeordneten Elektromagneten verbunden ist. Um eine Betätigung des vorbekannten Bremskraftverstärkers durch den Fahrer zu ermöglichen, ist ein mit der Betätigungsstange in kraftübertragender Verbindung stehender Ventilkolben vorgesehen, an dem der Anker sich axial abstützt und somit bei der Fahrerbetätigung vom Ventilkolben mitgenommen werden kann. Bei einer Fremdbetätigung bzw. einem Bestromen des Elektromagneten hebt der erste Dichtsitz vom Ventilkörper ab, so daß die Atmosphäre in die Arbeitskammer einströmen kann.

Aus der DE 42 38 333 A1 ist ein Unterdruckbremskraftverstärker bekannt, dessen Steuerventil einen dritten Dichtsitz aufweist, der mittels eines Elektromagneten betätigbar ist und der bei einer Fremdbetätigung funktionsmäßig den zweiten Dichtsitz ersetzt. Die Betätigung des Steuerventils durch den Elektromagneten erfolgt entgegen der Richtung der Betätigung durch den Fahrer, so daß der Ventilkörper durch Verschieben des dritten Dichtsitzes von dem am Ventilkolben ausgebildeten ersten Dichtsitz wegbewegt wird.

Es ist daher Aufgabe der vorliegenden Erfindung, ein Verfahren zum Betrieb von pneumatischen Kraftverstärkern der eingangs genannten Gattung vorzuschlagen, das einen schnellen Druckaufbau auf einen gewünschten Wert ermöglicht, ohne daß eine Betätigung des Bremskraftverstärkers durch den Fahrer erforderlich ist. Der gewünschte Druckwert soll dabei vorzugsweise unterhalb der durch die Fremdbetätigung maximal erreichbaren Grenze liegen.

Diese Aufgabe wird erfindungsgemäß dadurch gelöst, daß der Elektromagnet mit einem fest vorgegebenen Stromverlauf angesteuert wird, und daß nach dem Erreichen eines festgelegten Druckwertes im Hauptbremszylinder der hydraulische Druck durch Änderungen des dem Elektromagneten zuzuführenden elektrischen Stroms geregelt wird.

Zur Konkretisierung des Erfindungsgedankens ist vorgesehen, daß
a) der Elektromagnet mittels eines Stromimpulses maximaler Stromgröße ohne Beeinflussung des Steuerventils angesteuert wird,
b) wonach der dem Elektromagneten zuzuführende Strom rampenartig über die Öffnung des ersten oder des weiteren Dichtsitzes hinaus bis zum Erreichen des festgelegten Druckwertes im Hauptbremszylinder erhöht wird,
c) anschließend der Strom auf einen Wert abgesenkt wird, bei dem der im Verstärkergehäuse herrschende pneumatische Druck bei gleichzeitigem Anstieg des hydraulischen Druckes im Hauptbremszylinder konstant bleibt und
d) der im Schritt c) eingestellte Stromwert so geändert wird, daß der im Hauptbremszylinder eingesteuerte Druck einem von der elektronischen Steuereinheit erzeugten Sollwert entspricht.

Der im Schritt c) eingestellte Stromwert wird dabei vorzugsweise derart geändert, daß der im Hauptbremszylinder eingesteuerte Druck konstant bleibt. Die Erfindung wird in der nachfolgenden Beschreibung an einem Ausführungsbeispiel im Zusammenhang mit der beiliegenden Zeichnung näher erläutert.
In der Zeichnung zeigt:
- Fig. 1: eine Ausführung eines Bremssystems zur Durchführung des erfindungsgemäßen Verfahrens, stark vereinfacht;
- Fig. 2: eine Ausführung eines fremdbetätigbaren Bremskraftverstärkers im Längsschnitt; teilweise weggebrochen, in der inaktiven Bereitschaftsstellung; und
- Fig. 3: eine diagrammatische Darstellung einer Fremdbetätigung des in Fig.2 gezeigten Bremskraftverstärkers, insbesondere die Zeitverläufe des dem Elektromagneten des Bremskraftverstärkers zugeführten Stromes (Fig. 3a), sowie des Druckaufbaus in dem dem Bremskraftverstärker nachgeschalteten Hauptbremszylinder (Fig. 3b).

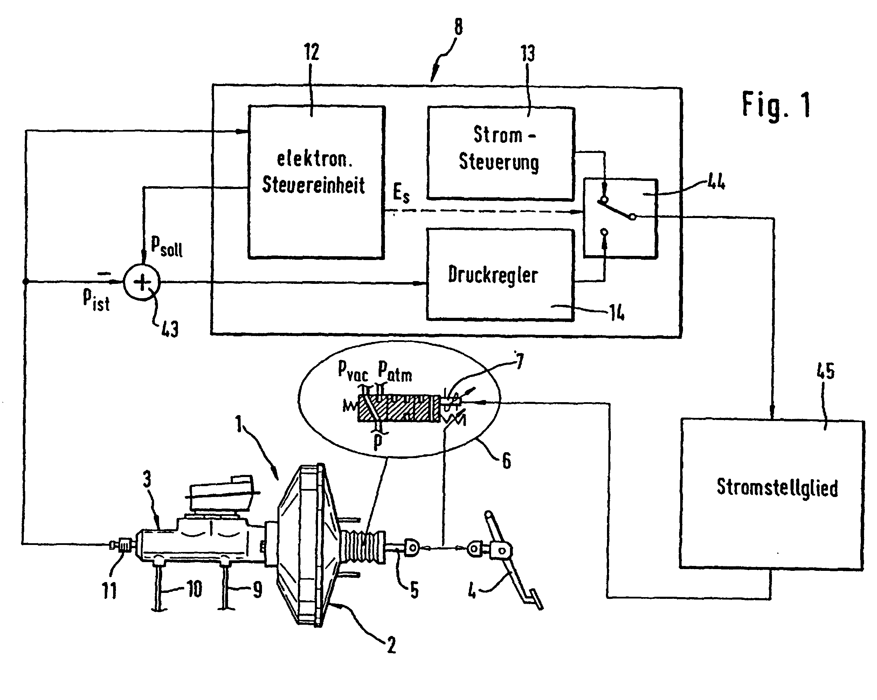

Die in Fig. 1 dargestellte Bremsanlage für Kraftfahrzeuge besteht im wesentlichen aus einer Betätigungseinheit 1, einem elektronischen Steuergerät 8 und nicht gezeigten Radbremsen eines Kraftfahrzeuges. Die Betätigungseinheit 1 besteht ihrerseits aus einem sowohl mittels eines Betätigungspedals 4 als auch unabhängig vom Betätigungspedal 4 betätigbaren pneumatischen Bremskraftverstärker, vorzugsweise einem Unterdruck-Bremskraftverstärker 2, dem ein Hauptbremszylinder, vorzugsweise ein Tandemhauptzylinder 3, nachgeschaltet ist, dessen nicht gezeigte Druckräume über hydraulische Leitungen 9, 10 mit den Radbremsen in Verbindung stehen. An das Betätigungspedal 4 ist eine Betätigungsstange 5 angekoppelt, die der mechanischen Betätigung eines lediglich schematisch angedeuteten Steuerventils 6 dient, das den Auf- und Abbau eines pneumatischen Differenzdruckes im Gehäuse des Unterdruck-Bremskraftverstärkers 2 steuert. Ein Elektromagnet 7 ermöglicht dabei eine (Fremd-) Ansteuerung des Steuerventils 6 unabhängig von der an der Betätigungsstange 5 vom Fahrer des Fahrzeuges eingeleiteten Betätigungskraft. Der Elektromagnet 7 wird dabei durch Ansteuersignale des elektronischen Steuergerätes 8 mittels eines Stromstellglieds 45 angesteuert, dessen Aufbau im nachfolgenden Text erläutert wird. Ein an einen der Druckräume des Tandemhauptzylinders 3 angeschlossener Drucksensor 11 ermittelt den im Tandemhauptzylinder 3 eingesteuerten hydraulischen Druck.

Das elektronische Steuergerät 8 besteht im wesentlichen aus einer elektronischen Steuereinheit 12, einer Stromsteuerung 13 sowie einem Druckregler 14. Die elektronische Steuereinheit 12, der das Ausgangssignal pᵢₛₜ des vorhin erwähnten Drucksensors 11 zugeführt wird, erzeugt ein Druckvorgabesignal pₛₒₗₗ, das mit dem den im Hauptbremszylinder 3 herrschenden hydraulischen Druck repräsentierenden Istwertsignal pᵢₛₜ in einer Vergleichsschaltung 43 verglichen wird, wobei das Vergleichsergebnis als Eingangsgröße dem Druckregler 14 zugeführt wird. Außerdem erzeugt die Steuereinheit 12 in Abhängigkeit von dem Istdruckwert pᵢₛₜ Steuersignale Eₛ, die zur Entscheidung herangezogen werden, ob der Elektromagnet 7 durch die Stromsignale Iₛ der Stromsteuerung 13 oder die Ausgangssignale Iₚ des Druckreglers 14 angesteuert werden soll. Die erwähnte Umschaltfunktion ist schematisch durch die Darstellung eines Umschalters 44 angedeutet.

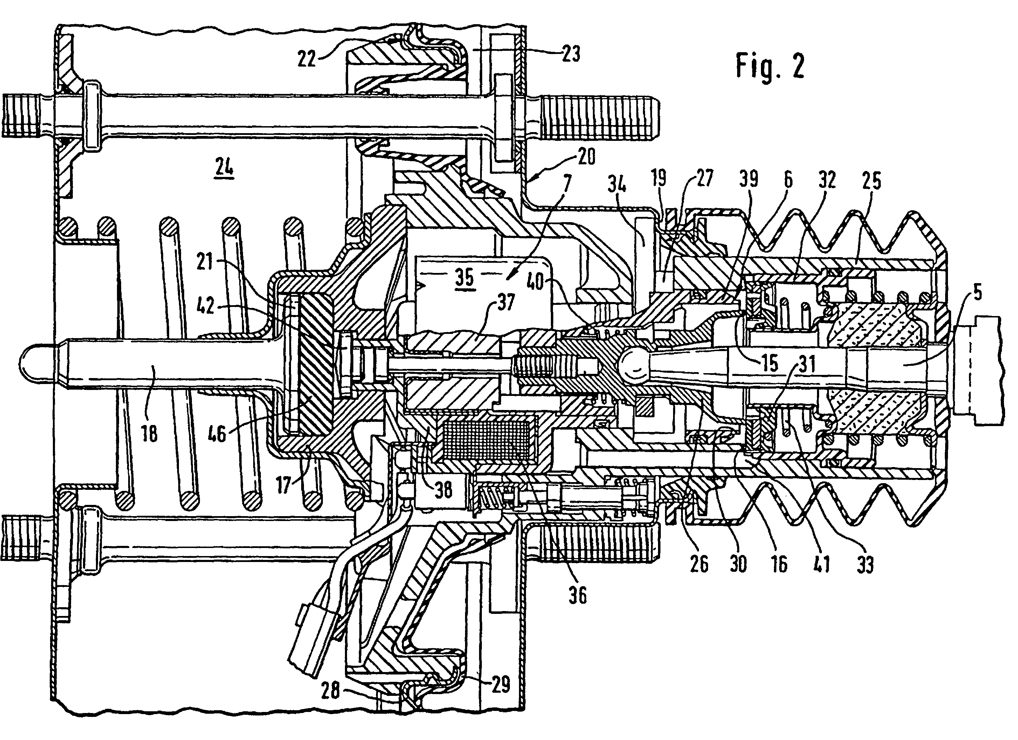

Fig. 2 zeigt eine Ausführung eines zum Zweck der erwähnten Druckregelung einsetzbaren, fremdbetätigbaren Unterdruck-Bremskraftverstärkers. Das lediglich schematisch angedeutete Verstärkergehäuse 20 dieses Bremskraftverstärkers ist durch eine axial bewegliche Wand 22 in eine Arbeitskammer 23 und eine Unterdruckkammer 24 unterteilt. Die axial bewegliche Wand 2 besteht aus einem aus Blech tiefgezogenen Membranteller 28 und einer daran anliegenden flexiblen Membran 29, die nicht näher dargestellt zwischen dem äußeren Umfang des Membrantellers 28 und dem Verstärkergehäuse 20 eine Rollmembran als Abdichtung bildet.

Das im Zusammenhang mit Fig. 1 erwähnte, mittels der Betätigungsstange 5 betätigbare Steuerventil 6 ist in einem im Verstärkergehäuse 20 abgedichtet geführten, die bewegliche Wand 22 tragenden Steuergehäuse 25 untergebracht und besteht aus einem am mit der Betätigungsstange 5 verbundenen Ventilkolben 26 ausgebildeten ersten Dichtsitz 15, einem im Steuergehäuse 25 ausgebildeten zweiten Dichtsitz 16, einem radial zwischen den beiden Dichtsitzen 15,16 angeordneten dritten Dichtsitz 30 sowie einem mit den Dichtsitzen 15,16,30 zusammenwirkenden, in einem im Steuergehäuse 25 abgedichtet angeordneten Führungsteil 32 geführten, ringförmigen Ventilkörper 31, der mittels einer sich am Führungsteil 32 abstützenden Ventilfeder 33 auf die Dichtsitze 15,16,30 zu vorgespannt ist. Die Arbeitskammer 23 ist mit der Unterdruckkammer 24 über einen seitlich im Steuergehäuse 25 verlaufenden Kanal 41 verbindbar.

Die Bremskraft wird über eine stirnseitig an einem am Steuergehäuse 25 sich abstützenden Vorderteil 17 anliegende gummielastische Reaktionsscheibe 36 sowie eine einen Kopfflansch 21 aufweisende Druckstange 18 auf einen Betätigungskolben eines nicht dargestellten Hauptbremszylinders der Bremsanlage übertragen, der an der unterdruckseitigen Verstärkergehäusehälfte angebracht ist. gungskolben eines nicht dargestellten Hauptbremszylinders der Bremsanlage übertragen, der an der unterdruckseitigen Verstärkergehäusehälfte angebracht ist.

Um die Arbeitskammer 3 bei der Betätigung des Steuerventils 6 mit der Atmosphäre verbinden zu können, ist schließlich im Steuergehäuse 25 ein annähernd radial verlaufender Kanal 27 ausgebildet.Die Rückkehrbewegung des Ventilkolbens 26 am Ende eines Bremsvorganges wird dabei durch ein Querglied 34 begrenzt, das in der in der Zeichnung gezeigten Lösestellung des Unterdruckbremskraftverstärkers an einem im Verstärkergehäuse 1 ausgebildeten Anschlag 19 anliegt.

Um eine von der Betätigungsstange 5 unabhängige Fremdbetätigung des in Fig. 2 gezeigten Bremskraftverstärkers einzuleiten, ist der im Zusammenhang mit Fig. 1 erwähnte Elektromagnet 7 vorgesehen, der vorzugsweise in einem mit dem Ventilkolben 26 fest verbundenen Gehäuse 35 angeordnet ist und demnach zusammen mit dem Ventilkolben 26 im Steuergehäuse 25 verschiebbar ist. Der Elektromagnet 7 besteht aus einer innerhalb des Gehäuses 35 angeordneten Spule 36 sowie einem axial verschiebbar angeordneten zylindrischen Anker 37, der teilweise in einem das Gehäuse 35 verschließenden Verschlußteil 38 geführt wird und an dem sich eine Kraftübertragungshülse 39 abstützt, die den vorhin erwähnten dritten Dichtsitz 30 trägt. Zwischen dem Ventilkolben 26 und der Kraftübertragungshülse 39 ist eine Druckfeder 40 angeordnet, die den Anker 37 in seiner Ausgangslage hält, in der der dritte Dichtsitz 30 gegenüber dem am Ventilkolben 26 ausgebildeten ersten Dichtsitz 15 axial versetzt angeordnet ist. Das im Steuergehäuse 25 geführte Verschlußteil 38 liegt unter Zwischenschaltung einer Übersetzungsscheibe 42 an der vorhin erwähnten Reaktionsscheibe 36 an und ermöglicht eine Übertragung der an der Betätigungsstange 5 eingeleiteten Eingangskraft auf die Reaktionsscheibe 36.

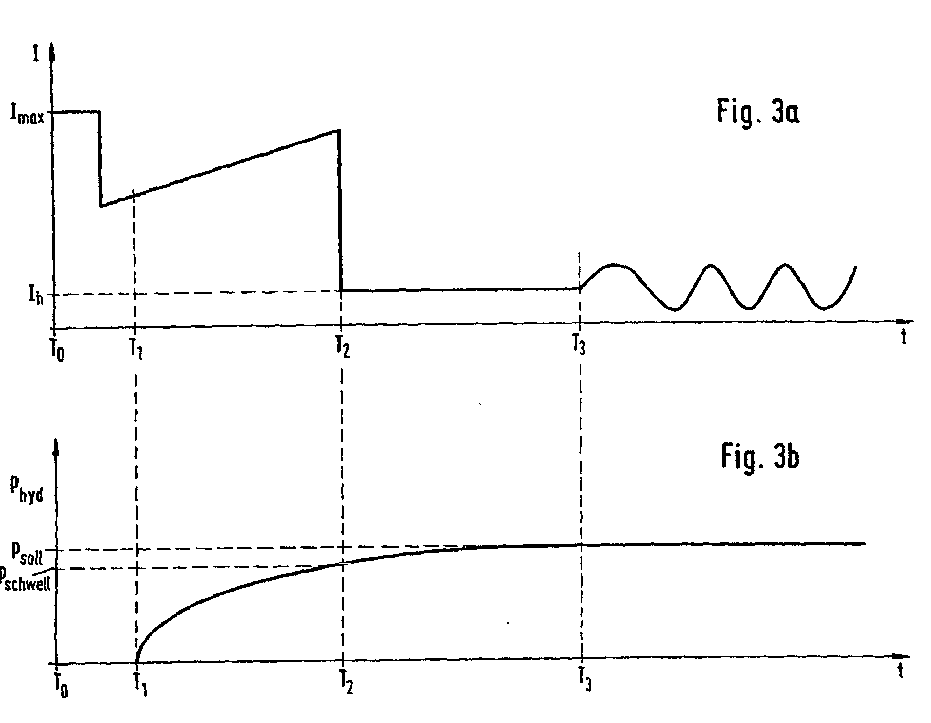

Wie der diagrammatischen Darstellung in Fig. 3 zu entnehmen ist, wird der Elektromagnet 7 des in Fig. 2 gezeigten Bremskraftverstärkers zu Beginn einer Fremdbetätigung (Zeitpunkt T₀) mit einem kurzen Impuls maximaler Stromgröße mit anschließendem rampenartigem Stromanstieg beaufschlagt und somit derart angesteuert, daß sich der dritte Dichtsitz 30 im ersten Zeitintervall T₀-T₁ schnell auf den Ventilkörper 31 zu bewegt, bis er daran zur Anlage kommt und den vorhin erwähnten zweiten Dichtsitz 16 funktionsmäßig überbrückt. Bei der weiteren Bewegung des dritten Dichtsitzes 30 wird dieser zunächst in der Betätigungsrichtung des Elektromagneten 7, d.h. entgegen der Betätigungsrichtung des Bremskraftverstärkers, in das Material des Ventilkörpers 31 hineingedrückt und verschiebt anschließend diesen vom ersten Dichtsitz 15 weg, so daß im Zeitpunkt T1 zwischen dem Ventilkörper 31 und dem ersten Dichtsitz 15 ein Spalt entsteht, der sich mit steigendem Strom vergrößert und ein Einströmen der Atmosphäre in die Arbeitskammer 23 ermöglicht. Bei dem vorhin beschriebenen Vorgang, bei dem der zweite Dichtsitz 16 funktionsmäßig durch den dritten Dichtsitz 30 ersetzt wird, erfolgt ein Druckaufbau in dem dem Bremskraftverstärker 2 nachgeschalteten Hauptbremszylinder 3, und zwar bis zum Erreichen eines Schwellwertes p_{schwell} im Zeitpunkt T2, in dem der dem Elektromagneten 7 zugeführte Strom auf einen konstanten Wert Iₕ abgesenkt und für eine feste Zeit (bis zum Zeitpunkt T3 auf diesem Wert gehalten wird. In diesem Zeitintervall steigt der im Hauptbremszylinder 3 eingesteuerte hydraulische Druck auf den durch die elektronische Steuereinheit 12 (Fig. 1) vorgegebenen Sollwert pₛₒₗₗ. Der Wert Iₕ ist dabei vorzugsweise so groß gewählt, daß sich der dritte Dichtsitz 30 soweit bewegt, bis der Ventilkörper 31 den ersten Dichtsitz 15 wieder schließt, der dritte Dichtsitz 16 jedoch geschlossen bleibt. Der dem Elektromagneten 7 zugeführte Strom wurde im Zeitintervall T0 bis T3 vom Funktionsblock "Stromsteuerung" 13 (Fig. 1) geliefert. Im Zeitpunkt T3, in dem der hydraulische Druck seinen Sollwert erreicht hat, erzeugt die elektronische Steuereinheit 12 das Umschaltsignal Eₛ, das ein Umschalten von der Stromsteuerung 13 auf den Druckregler 14, ggf. einen P-Regler, bewirkt. Der im Druckregler 14 enthaltene Regelalgorithmus stellt nun den dem Elektromagneten 7 zugeführten Strom derart ein, daß der hydraulische Druck p_{hyd} im Hauptbremszylinder 3 konstant bleibt. Wie bereits erwähnt, dient als Führungs- oder Sollgröße der im Hauptbremszylinder 3 herrschende hydraulische Druck, wobei der Druckregler 1 4 den Druckwert pₛₒₗₗ einliest, der nach Ablauf des Zeitintervalls T0 - T3 im System herrscht.

## Patentansprüche

1. Verfahren zum Betrieb eines pneumatischen Bremskraftverstärkers (2) mit einem Verstärkergehäuse (20), dessen Innenraum durch eine bewegliche Wand (22) in eine Unterdruckkammer (24) und eine Arbeitskammer (23) unterteilt ist, sowie einem Steuergehäuse (25), in dem ein eine auf die bewegliche Wand (22) einwirkende pneumatische Druckdifferenz steuerndes Steuerventil (6) angeordnet ist, das einen durch eine Betätigungsstange (5) betätigbaren ersten Dichtsitz (15), dessen Öffnen eine Belüftung der Arbeitskammer (23) ermöglicht, einen zweiten Dichtsitz (16), dessen öffnen eine Verbindung zwischen den beiden Kammern (24,23) ermöglicht, sowie einen mit den beiden Dichtsitzen (15,16) zusammenwirkenden elastischen Ventilkörper (31) aufweist, wobei der erste Dichtsitz (15) oder ein weiterer, mit dem Ventilkörper (31) zusammenwirkender Dichtsitz (30) unabhängig von der Betätigungsstange (5) im Sinne der Belüftung der Arbeitskammer (23) durch einen mittels einer elektronischen Steuereinheit (12) ansteuerbaren Elektromagneten (7) betätigbar ist und wobei der in einem dem Bremskraftverstärker (2) nachgeschalteten Hauptbremszylinder (3) eingesteuerte hydraulische Druck ermittelt wird, **dadurch gekennzeichnet, daß** der Elektromagnet (7) mit einem fest vorgegebenen Stromverlauf angesteuert wird, und daß nach Erreichen eines festgelegten Druckwertes (p_{schwell}) im Hauptbremszylinder (3) der hydraulische Druck durch Änderungen des dem Elektromagneten (7) zuzuführenden elektrischen Stroms (I) geregelt wird.

2. Verfahren nach Anspruch 1, **dadurch gekennzeichnet, daß** a) der Elektromagnet (7) mittels eines Stromimpulses maximaler Stromgröße (Iₘₐₓ) ohne Beeinflussung des Steuerventils (6) angesteuert wird,
b) wonach der dem Elektromagneten (7) zuzuführende Strom rampenartig über die Öffnung des ersten oder des weiteren Dichtsitzes (30) hinaus bis zum Erreichen des festgelegten Druckwertes (p_{schwell}) im Hauptbremszylinder (3) erhöht wird,
c) anschließend der Strom auf einen Wert (Iₕ) abgesenkt wird, bei dem der im Verstärkergehäuse(20) herrschende pneumatische Druck bei gleichzeitigem Anstieg des hydraulischen Druckes (p_{hyd})im Hauptbremszylinder (3) konstant bleibt und
d) der im Schritt c) eingestellte Stromwert (Iₕ) so geändert wird, daß der im Hauptbremszylinder (3) eingesteuerte Druck einem von der elektronischen Steuereinheit (12) erzeugten Sollwert (pₛₒₗₗ) entspricht.

3. Verfahren nach Anspruch 2 **dadurch gekennzeichnet, daß** der im Schritt c) eingestellte Stromwert (Iₕ) so geändert wird, daß der im Hauptbremszylinder (3) eingesteuerte Druck konstant bleibt.

## Claims

1. Method of operating a pneumatic brake force booster (2) which includes a booster housing (20) having its interior subdivided by a movable wall (22) into a vacuum chamber (24) and a working chamber (23), and a control housing (25) accommodating a control valve (6) that controls a pneumatic pressure differential which acts upon the movable wall (22), the control valve comprising a first sealing seat (15) that is operable by an actuating rod (5) and, when opened, permits ventilating the working chamber (23), a second sealing seat (16) which, when opened, permits a connection between the two chambers (24, 23), and an elastic valve member (31) which interacts with the two sealing seats (15, 16), wherein the first sealing seat (15) or another sealing seat (30) interacting with the valve member (31) is operable independently of the actuating rod (5) to the effect of ventilating the working chamber (23) by an electromagnet (7) actuatable by an electronic control unit (12), and wherein the hydraulic pressure is determined which is introduced into a master brake cylinder (3) connected downstream of the brake force booster (2),
**characterized in that** the electromagnet (7) is actuated with an invariably predefined current variation, and that after a fixed pressure value (p_{schwell}) in the master brake cylinder (3) is reached, the hydraulic pressure is controlled by variations of the electric current (I) being fed to the electromagnet (7).

2. Method as claimed in claim 1,
**characterized in that**
a) the electromagnet (7) is actuated by way of a current pulse of a maximum current strength (Iₘₐₓ) without influence of the control valve (6),
b) whereupon the current being supplied to the electromagnet (7) is slope-like increased beyond the opening of the first or the further sealing seat (30) until the fixed pressure value (p_{schwell}) in the master brake cylinder (3) is reached,
c) subsequently, the current is reduced to a value (Iₕ) where the pneumatic pressure that prevails in the booster housing (20) remains constant, while the hydraulic pressure (p_{hyd}) in the master brake cylinder (3) rises simultaneously, and
d) the current value (Iₕ) adjusted in step c) is varied so that the pressure introduced into the master brake cylinder (3) corresponds to a nominal value (pₛₒₗₗ) produced by the electronic control unit (12).

3. Method as claimed in claim 2,
**characterized in that** the current value (Iₕ) adjusted in step c) is varied so that the pressure introduced into the master brake cylinder (3) remains constant.

## Revendications

1. Procédé pour faire fonctionner un servofrein pneumatique (2) comportant un boîtier de servofrein (20) dont le volume intérieur est divisé par une cloison mobile (22) en une chambre à dépression (24) et une chambre de travail (23), comportant aussi un boîtier de commande (25) dans lequel est disposée une soupape de commande (6) qui commande une différence de pression pneumatique agissant sur la cloison mobile (22), et comporte un premier siège d'étanchéité (15) qui peut être actionné au moyen d'une tige d'actionnement (5) et dont l'ouverture permet de ventiler la chambre de travail (23), un deuxième siège d'étanchéité (16) dont l'ouverture permet une communication entre les deux chambres (24, 23), ainsi qu'un corps de soupape (31) élastique coopérant avec les deux sièges d'étanchéité (15, 16), le premier siège d'étanchéité (15) où un autre siège d'étanchéité (30), coopérant avec le corps de soupape (31), pouvant être actionné par un électro-aimant (7) qui peut être commandé au moyen d'une unité électronique de commande (12) afin de ventiler la chambre de travail (23), et la pression hydraulique introduite dans un cylindre de frein principal (3), monté en aval du servofrein (2), étant déterminée, **caractérisé en ce que** l'électro-aimant (7) est commandé avec une courbe prédéterminée et fixe du courant, et **en ce qu'**après obtention d'une valeur de pression (p_{schwell}) définie dans le cylindre de frein principal (3), la pression hydraulique est régulée par des variations du courant électrique (1) à envoyer à l'électro-aimant (7).

2. Procédé selon la revendication 1, **caractérisé en ce que**
a) l'électro-aimant (7) est commandé au moyen d'une impulsion de courant d'intensité maximale (Iₘₐₓ) sans influence de la soupape de commande (6),
b) après quoi le courant à amener à l'électro-aimant (7) est augmenté en rampe au-delà de l'ouverture du premier ou de l'autre siège d'étanchéité (30), jusqu'à ce que la valeur de pression définie (p_{schwell}) soit atteinte dans le cylindre de frein principal (3),
c) le courant est ensuite abaissé à une valeur (Iₕ) à laquelle la pression pneumatique qui règne dans le boîtier de servofrein (20) reste constante en même temps qu'augmente la pression hydraulique (p_{hyd}) dans le cylindre de frein principal (3), et
d) la valeur de courant (Iₕ) réglée à l'étape c) est modifiée de manière que la pression introduite dans le cylindre de frein principal (3) corresponde à une valeur de consigne (pₛₒₗₗ) produite par l'unité électronique de commande (12).

3. Procédé selon la revendication 2, **caractérisé en ce que** la valeur de courant (Iₕ) réglée à l'étape c) est modifiée de manière que la pression introduite dans le cylindre de frein principal (3) reste constante.
